# EUROPEAN PATENT SPECIFICATION

(11) **EP 1 470 006 B1**
(45) Date of publication and mention of the grant of the patent: **07.05.2008**
(21) Application number: 03734645.9
(22) Date of filing: 28.01.2003
(51) Int. Cl.: B60B 17/00

(54) **A DISC FOR RAILWAY WHEEL**
SCHEIBE FÜR EISENBAHNRAD
DISQUE POUR ROUE DE VEHICULE FERROVIAIRE

(30) Priority: 28.01.2002 CZ 20020325
(43) Date of publication of application: 27.10.2004
(73) Proprietor: Bonatrans Group a.s., 100 Praha 10 (CZ)
(72) Inventor: ZIMA, Radim, 735 11 Orlová-Mecaron;sto (CZ); VAMPOLA, Vladimir, 735 43 Albrechtice (CZ); PAVCO, Petr, 735 31 Bohumin-Skre (CZ)
(74) Representative: Pelikanova, Ivana
(86) International application number: PCT/CZ2003/000006
(87) International publication number: WO 2003/064182

(56) References cited:
- DE-A- 3 117 572
- US-A- 3 127 212
- US-A- 4 067 600
- US-A- 5 039 152

## Description

### Field of the Invention

The present invention relates to the design of a railway wheel, which railway wheel is permanently slightly deformed because of substantial thermal stress and subsequent cooling in combination with load by wheel forces when the wheel is braked by a brake block.

### Background of the Invention

Railway wheels consist of three main parts, a wheel hub, a wheel rim and a wheel plate, which wheel plate provides transition between the wheel hub and the wheel rim. Wheels having a planar wheel plate are known in the art. However, the most frequently used ones are the lightweight wheels with various bent and shaped plates, wherein, the wheel plate shape has an influence on wheel resistance to mechanical and thermal loading.

The standard and still the most frequent design in the operation on railways is the wheel with a plate formed by a tangential profile, the so-called UIC-ORE wheel. This wheel can resist to high temperatures in the wheel rim. However, its disadvantage is high stress in the wheel rim after cooling and formation of plastic deformations because of low resilience. The disadvantages substantially limit the use of higher axle pressures, which pressures are then insufficient particularly in case of railway freight wagons.

Another known and frequently used railway wheel is a wheel designed as a bell shape wheel according to the DE patent no. 3 117 572. In this design, the central line of the wheel, it is its axis, is formed by a regular curve defined by a cosine function. In practice, three identical curvature radiuses often approximate the curve. In case of this wheel, an advantage is a lower wheel weight and a lower residual stress in the rim when it is cooled down after braking. However, to be used for higher axis pressures, such wheel design requires having a strengthened wheel plate, whereby, the advantage of lower weight is lost and moreover the level of residual stresses in the wheel rim is worse together with higher wheel rim deformations with regard to the wheel hub.

### Summary of the Invention

The above mentioned disadvantages are substantially removed by a railway wheel having its central plane perpendicular to its wheel axis of rotation, which wheel comprises of a wheel rim formed by a running surface and a flange, a wheel plate and a wheel hub, wherein, the transverse profile of the wheel plate is situated along the theoretical central line, which central line runs between a first point situated in the transfer place where the wheel plate transfers into the wheel rim, a central point, which central point is situated at the opposite side of the central plane than the flange, in the place of maximal axial buckling of the wheel plate, and a second point situated at the place where the wheel plate transfers into the wheel hub, which railway wheel consists in that the first point and the second point of the central line of the wheel plate are situated in one plane, which plane is perpendicular to the wheel axis of rotation, it is shifted from the central plain in the direction to the external edge of the wheel rim and where the distance between the plane and the central point of the central line of the wheel plate is maximally 0.5 of the width of the wheel rim, wherein, individual parts of the central line of the wheel plate are formed by cubic curves or are formed by circular arcs so that the section from the first point to the central point consists of a curvature having a first external radius of curve and of another curvature having a first internal radius of curve, whereby, in this section the first internal radius is greater than the first external radius and a section from the second point to the central point consisting of a curvature having a second external radius of curve and of a curvature of a second internal radius of curve, whereby, the second internal radius in this section is greater than the second external radius.

The central plane of the wheel plate runs through the wheel rim in the place of the so-called tread circle, where theoretically the running surface of the wheel contacts the head centre of a rail. The curvature of the central line of the wheel plate with the first external radius is situated nearer to the wheel rim than the curvature with the first internal radius and the curvature with the second external radius is situated nearer to the wheel hub than the curvature with the second internal radius.

Considering the railway wagon bogie design and the guiding and the flank clearances in a wheel set of a bogie, the maximal axial buckling of the wheel plate is preferably selected so that the wheel plate surface does not exceed the external edge of the wheel rim. Preferably, the wheel is designed so that the distance between the first point of the wheel plate central line and the wheel axis of rotation is in the range from 0.7 to 0.85 of the railway wheel external diameter and the distance from the second point of the wheel plate central line to the wheel axis of rotation is between 0.3 to 0.45 of the railway wheel external diameter.

To reach the most preferable results from the point of view of minimal deformations, it is also recommended to form the central line of the wheel plate by two pairs of dimensionally identical parts of cubic curves or circular arcs, i.e. so that both internal radiuses are of equal size and both external radiuses are also of equal size, whereby in each of the sections of the wheel plate central line the size of internal radiuses is 1.5 to 3.5 multiple of the size of external radiuses of the section.

Also, a preferable embodiment of the railway wheel is such that the wheel plate central line is formed by a combination of circular arcs or cubic curves and straight linear sections. Short linear sections can be situated in one or both places of mutual transitions between the internal and the external curvatures of circular arcs or cubic curves.

Also, a preferable embodiment of the railway wheel is such that the thickness of the wheel plate transverse profile along the central line is constant or it decreases evenly, or eventually according to a conic or cubic curve, beginning with the second point up to the first point.

Also, a preferable embodiment of the railway wheel is such that the thickness of wheel plate transverse profile along the wheel plate centre line decreases evenly or eventually according to a conic or cubic curve from the second point to the central point, from which point it is then constant up to the first point.

It is an advantage of this railway wheel that it exhibits very low tangential stress values in the wheel rim and first of all low values of permanent plastic deformations when keeping an optimal wheel weight. This allows using of such wheels not only for railway freight wagons but also for all railway vehicles with block brakes acting on running surface, including the driving vehicles and locomotives as it is possible to load with vertical wheel force up to 15 metric tons per one wheel, what is a substantially higher value than that of the now used wheels. The wheel can be made of steel of any quality used in the railway industry and manufactured according to the known technical standards by rolling and forging or eventually by casting. In braking by a block brake the wheel is able to absorb repeatedly braking cycles with brake power 55 kW for 45 minutes without any negative consequences to the wheel rim deformation and to the increase in tensile tangential stresses in wheel rim at cooling the wheel rim after its heating caused by braking. Therefore, no change in gauge or in the distance between a wheel set on a railway axle takes place, what increases safety during running through rail switches and crossings and limits the possibility of railway wagon derailing.

### Brief Description of the Drawings

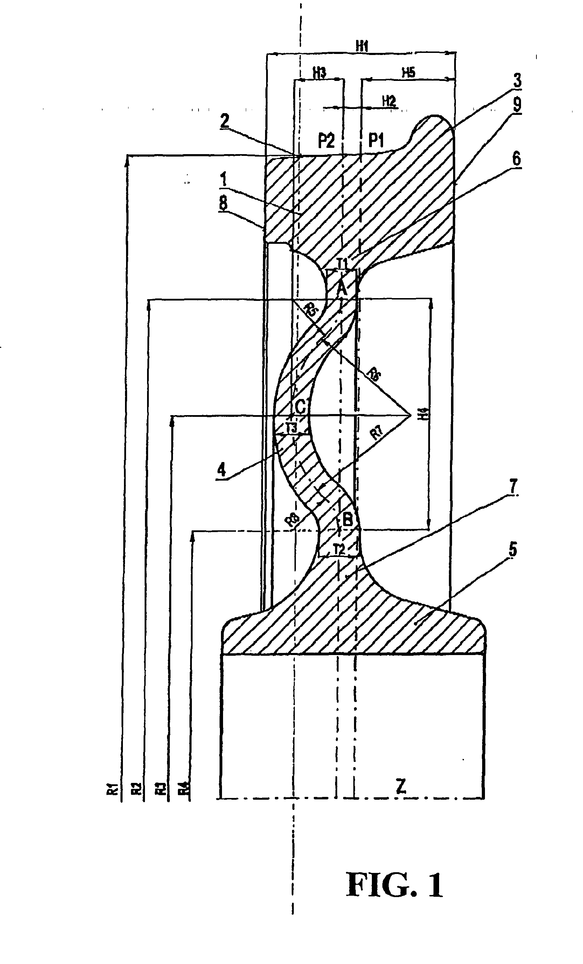

The invention in its various aspects will now be described with reference to a drawing thereof, in which Fig. 1 shows one half of a railway wheel in sectional view.

### Detailed Description of the Invention

A railway wheel in Fig. 1 has an external radius R1 and comprises of a wheel rim 1 with a running surface 2 and a flange 3, of a wheel plate 4, of a wheel hub 5, of a first transfer 6 of the wheel plate 4 into the wheel rim 1 and of a second transfer 7 of the wheel plate 4 into the wheel hub 5. The wheel rim 1 is limited by an external edge 8, an internal edge 9 and has width H1. On the central line of the transverse profile of the wheel plate 4 there is a first point A at radius R2, a central point C at radius R3, and a second point B at radius R4. The central line of the wheel plate 4 consists of section AC, which section AC is formed by a circular arc having a first external radius R5 and a circular arc having a first internal radius R6 and of section CB, which section CB is formed by a circular arc having a second internal radius R7 and a circular arc having a second external radius R8, whereby the internal radiuses R6 and R7 have the same size and are greater than identical external radiuses R5 and R8. A plane P2 is perpendicular to a wheel axis of rotation Z and is shifted off the central plane P1, which central plane P1 is situated with distance H5 to the internal edge 9 of the wheel rim 1, in the direction to the external edge 8 of the wheel rim 1 by a distance H2. Both the first point A and the second point B of the central line of the wheel plate 4 are situated in the plane P2. A distance H4 between the first point A and the second point B of the central line of the wheel plate 4 in plane P2 is given by the difference between the radiuses R2 and R4, whereby the radius R2 is 0.8 multiple of the external radius R1 and radius R4 is 0.4 multiple of the external radius R1. The distance H3 between the plane P2 and the central point C of the central line of the wheel plate 4 is designed so that the surface of the wheel plate 4 does not exceed the external edge 8 of the wheel rim 1. The wheel plate 4 has thickness T2 at the position of the second point B and the thickness evenly decreases via the central point C, where the thickness is T3 further to the first point A, where the thickness is T1.

### Industrial Use

The railway wheel having low level of stress and deformations can be used for all models of rail vehicles with block brakes acting on the running surface, particularly for railway freight wagons, driving vehicles and locomotives. Considering the good radial compliance and sufficient fatigue strength in the critical place of the wheel, i.e. at the wheel plate transfer into the wheel hub, it is possible to use this wheel design also in rail vehicles where instead of the block brake separate break disks are used, what is the case of railway wagons for transport of persons.

## Claims

1. A railway wheel having its central plane (P1) perpendicular to its wheel axis (Z) of rotation, which wheel comprises of a wheel rim (1) formed by a running surface (2) and a flange (3), a wheel plate (4) and a wheel hub (5), wherein, the transverse profile of the wheel plate (4) is situated along the theoretical central line, which central line runs between a first point (A) situated in the transfer place (6) where the wheel plate (4) transfers into the wheel rim (1), a central point (C), which central point (C) is situated at the opposite side of the central plane (P1) than the flange (3), in the place of maximal axial buckling of the wheel plate (4), and a second point (B) situated at the place (7) where the wheel plate (4) transfers into the wheel hub (5), **characterized in that** the first point (A) and the second point (B) of the central line of the wheel plate (4) are situated in one plane (P2), which plane (P2) is perpendicular to the wheel axis (Z) of rotation, it is shifted off the central plane (P1) in the direction to the external edge (8) of the wheel rim (1) and where the distance (H3) between the plane (P2) and the central point (C) of the central line of the wheel plate (4) is maximally 0.5 of the width (H1) of the wheel rim (1), wherein, individual parts of the central line of the wheel plate (4) are formed by cubic curves or are formed by circular arcs so that the section from the first point (A) to the central point (C) consists of a curvature having a first external radius (R5) of curve and of another curvature having a first internal radius (R6) of curve, whereby, in this section the first internal radius (R6) is greater than the first external radius (R5) and a section from the second point (B) to the central point (C) consisting of a curvature having a second external radius (R8) of curve and of a curvature of a second internal radius (R7) of curve, whereby, the second internal radius (R7) in this section is greater than the external radius (R8).

2. A railway wheel according to claim 1, **characterized in that** the central plane of the wheel plate (4) is formed by a combination of circular arcs or cubic curvatures and linear sections situated between the internal curvature and the external curvature of the wheel plate (4).

3. A railway wheel according to claims 1 or 2, **characterized in that** along the central line of the wheel plate (4) the thickness of the transverse profile of the wheel plate (4) is constant or decreases proportionally or according to a conic or cubic curve beginning at the second point (B) and ending at the first point (A).

4. A railway wheel according to claims 1 or 2, **characterized in that** along the central line of the wheel plate (4) the thickness of the transverse profile of the wheel plate (4) decreases proportionally or according to a conic or cubic curve beginning at the second point (B) and ending at the central point (C) and is then constant from the central point (C) to the first point (A).

## Patentansprüche

1. Ein Eisenbahnrad, das seine zentrale Ebene (P1) senkrecht zu seiner Radachse (Z) der Rotation hat, welches Rad aus einem durch eine Fahroberfläche (2) und einen Spurkranz (3) geformten Radkranz (1), einer Radplatte (4) und einer Radnabe (5) besteht, wobei das Querprofil der Radplatte (4) entlang einer theoretischen Zentrallinie angeordnet ist, welche Zentrallinie zwischen einem ersten Punkt (A), der in der Übergangsstelle (6), wo die Radplatte (4) in den Radkranz (1) übergeht, angeordnet ist, einem zentralen Punkt (C), welcher zentrale Punkt (C) an der Gegenseite der zentralen Ebene (P1) zur Seite des Spurkranzes (3), auf der Stelle des maximalen axialen Ausweichung der Radplatte (4) angeordnet ist, und dem zweiten Punkt (B), der an der Übergangsstelle (7) der Radplatte (4) in die Radnabe (5) angeordnet ist, **dadurch gekennzeichnet, dass** der erste Punkt (A) und der zweite Punkt (B) der Zentrallinie der Radplatte (4) in einer Ebene (P2) angeordnet sind, welche Ebene (P2) senkrecht zur Radachse (Z) der Rotation ist, wobei sie von der Zentralebene (P1) in Richtung zum Außenrand (8) des Radkranzes (1) verschoben ist, und wobei der Abstand (H3) zwischen der Ebene (P2) und dem zentralen Punkt (C) der Zentrallinie der Radplatte (4) maximal 0,5 der Breite (H1) des Radkranzes (1) beträgt, wobei die individuellen Teile der Zentrallinie der Radplatte (4) durch kubische Kurven geformt sind, oder sie sind durch kreisförmige Bögen so geformt, dass der Teil vom ersten Punkt (A) bis zu dem zentralen Punkt (C) aus einer Kurve, die einen ersten Außenradius (R5) der Kurve hat, und aus einer anderen Kurve, die den ersten Innenradius (R6) der Kurve hat, besteht, wobei in diesem Teil der erste Innenradius (R6) größer als der erste Außenradius (R5) ist, und der Teil vom zweiten Punkt (B) bis zum zentralen Punkt (C) aus einer Kurve, die einen zweiten Außenradius (R8) der Kurve hat und aus einer Kurve, die einen zweiten Innenradius (R7) der Kurve hat, besteht, wobei der zweite Innenradius (R7) in diesem Teil größer als der zweite Außenradius (R8) ist.

2. Ein Eisenbahnrad gemäß Anspruch 1, **dadurch gekennzeichnet, dass** die zentrale Ebene der Radplatte (4) durch eine Kombination der kreisförmigen Bögen oder kubischen Kurven und linearen Abschnitten gebildet ist, die zwischen der Innenkrümmung und der Außenkrümmung der Radplatte (4) angeordnet ist.

3. Ein Eisenbahnrad gemäß Anspruch 1 oder 2, **dadurch gekennzeichnet, dass** entlang der Zentrallinie der Radplatte (4) die Dicke des Querprofils der Radplatte (4) gleichmäßig ist, oder sich proportional oder gemäß einer Kurve des zweiten oder dritten Grades, beginnend vom zweiten Punkt (B) bis zum ersten Punkt (A), kleiner macht.

4. Ein Eisenbahnrad gemäß Anspruch 1 oder 2, **dadurch gekennzeichnet, dass** entlang der Zentrallinie der Radplatte (4) die Dicke des Querprofils der Radplatte (4) sich proportional oder gemäß einer Kurve des zweiten oder dritten Grades, beginnend vom zweiten Punkt (B) bis zum zentralen Punkt (C), kleiner macht, und ist dann konstant vom zentralen Punkt (C) bis zum ersten Punkt (A).

## Revendications

1. Roue ferroviaire présentant un plan (P1) médian perpendiculaire à l'axe (Z) de rotation de roue, cette roue comportant une couronne (1) definissant une surface (2) de roulement et un boudin (3), une plaque (4) de roue et un moyeu (5) de roue, le profil transversal de la plaque (4) étant situé le long de la médiane théorique s'étendant entre un premier point (A) situé dans une zone de raccordement (6) de la plaque (4) de roue à la couronne (1) de roue, un point (C) central situé dans un plan (P1) central du côté opposé au boudin (3) dans une zone de la maximale flexion axiale laterale de la plaque (4) de roue, et le deuxième point (B) situé dans une zone de raccordement (7) de la plaque (4) de roue au moyeu (5) de roue, **caractérisé en ce que** le premier point (A) et le deuxième point (B) de la médiane de la plaque (4) de roue sont situés dans un même plan (P2) perpendiculaire à l'axe (Z) de rotation de roue et décalé à partir du plan (P1) médian en direction du bord (8) externe de la couronne (1) de roue, la distance (H3) maximale entre ledit plan (P2) et le point (C) central de la médiane de la plaque (4) de roue est 0,5 de l'largeur (H1) de la couronne (1) de roue, les parties particulières de la médiane de la plaque (4) de roue sont formées par les courbes triquadratiques ou par les arcs de cercle de sorte que le secteur du premier point (A) au point (C) central est formé par une courbure ayant le premier rayon (R5) de courbure externe et par une courbure ayant le premier rayon (R6) de courbure interne, ledit premier rayon (R6) de courbure interne étant plus grand que ledit premier rayon (R5) externe, et le secteur du deuxième point (B) au point (C) central est formé par une courbure ayant le deuxième rayon (R8) externe et par une courbure ayant le deuxième rayon (R7) de courbure, ledit deuxième rayon (R7) de courbure étant plus grand que le deuxième rayon (R8) de courbure externe.

2. Roue ferroviaire selon la revendication 1, **caractérisée en ce que** la médiane de la plaque (4) de roue est formée par la combinaison des arcs de cercle ou des courbes triquadratiques et des secteurs lineaires s'étendant entre la courbure interne et la courbure externe de la plaque (4) de roue.

3. Roue ferroviaire selon l'une des revendications 1 à 2, **caractérisée en ce que** l'epaisseur du profil transversal de la plaque (4) de roue, le long de la médiane de la plaque (4) de roue, est constant ou il decroît d'une manière uniforme, eventuellement suivant la courbe triquadratique, à partir de deuxième point (B) jusqu'au premier point (A).

4. Roue ferroviaire selon l'une des revendications 1 à 2, **caractérisée en ce que** l'epaisseur du profil transversal de la plaque (4) de roue, le long de la médiane de la plaque (4) de roue, decroît d'une manière uniforme ou suivant la courbe biquadratique ou triquadratique à partir de deuxième point (B) jusqu'au point (C) centrale, à partir duquel il est constant jusqu'au premier point (A).
